# EUROPÄISCHE PATENTSCHRIFT

(11) **EP 1 531 084 B1**
(45) Veröffentlichungstag und Bekanntmachung des Hinweises auf die Patenterteilung: **30.05.2007**
(21) Anmeldenummer: 04026200.8
(22) Anmeldetag: 04.11.2004
(51) Int. Cl.: B60R 1/06

(54) **Tragarm für Fahrzeugspiegel**
Holding arm for a mirror on a vehicle
Bras support de rétroviseur pour véhicule

(30) Priorität: 05.11.2003 DE 10351660
(43) Veröffentlichungstag der Anmeldung: 18.05.2005
(73) Patentinhaber: MEKRA Lang GmbH & Co. KG, 90765 Fürth (DE)
(72) Erfinder: Heinrich, Lang, 91465 Ergersheim (DE); Pfanz, Jürgen, 91583 Schillingsfürst (DE); Meier, Markus, 91478 Markt Nordheim (DE); Mayer, Rudolf, 91607 Gebsattel (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 1 013 502
- EP-A- 1 024 051
- WO-A-02/14923
- DE-A1- 3 248 759
- DE-A1- 3 603 188
- DE-U1- 29 504 245

## Beschreibung

Die vorliegende Erfindung betrifft einen Tragarm für einen Fahrzeugspiegel, insbesondere für Nutzfahrzeuge.

Fahrzeugspiegel nach dem Stand der Technik umfassen wenigstens einen Spiegelkopf, der seinerseits wenigstens eine Spiegelscheibe umfaßt. Diese Spiegelscheibe kann fest oder verstellbar in einem Gehäuse angeordnet oder direkt in einem Rahmen befestigt sein. Gegebenenfalls sind im Gehäuse weiters eine Verstelleinrichtung zum motorischen Verstellen der Spiegelscheibe gegenüber dem Gehäuse, Heizelemente zum Beheizen des Spiegel oder dergleichen aufgenommen.

In einer einfachen Variante wird ein solcher Spiegelkopf an einem im wesentlichen U-förmig gebogenen metallischen Rohrbügel befestigt, der seinerseits an seinen beiden Enden an am Fahrzeug befestigten Lagerböcken befestigt wird. In der EP 0 090 909 A2 ist beispielsweise die Verstelleinrichtung mittels Klemmung an dem Rohrbügel festgelegt. In der EP 0 590 510 B 1 ist das Gehäuse selbst mittels Klemmung an dem Rohrbügel festgelegt. Der Rohrbügel seinerseits kann an am Fahrzeug befestigten Lagerböcken angelenkt sein. Hierzu schlägt die EP 0 697 311 B1 vor, an dem metallischen Rohrbügel Lagerbuchsen aus Kunststoff zu befestigen, die ihrerseits mit den Lagerböcken eine Rastverzahnung zur Winkelverstellung des Rohrbügels bilden.

Obwohl diese Konstruktion sehr stabil und einfach ist, weist sie eine Reihe von Nachteilen auf: zum einen ist die Spiegelscheibe (über das Gehäuse bzw. die Verstelleinrichtung) nur reibschlüssig drehfestgelegt. Zum anderen ist der Aufbau aeodynamisch unvorteilhaft, was Fahrtwiderstand und Beanspruchung durch Windkräfte nachteilig erhöht. Der aus Festigkeitsgründen komplett metallische Rohrbügel ist auch schwer. Schließlich sind mit den zusätzlichen Lagerbuchsen aus Kunststoff eine Viehlzahl von Einzelteilen erforderlich, was nicht nur die Herstellung, sondern auch die Monatge aufwendig und teuer macht.

Die EP 1 024 051 A2 schlägt hierzu einen einstückigen Tragarm mit zwei Haltearmen und einem diese verbindenden Anschlußteil vor. Am Anschlußteil des vollständig aus Kunststoff gefertigten Tragarms kann die Tragplatte eines Spiegelgehäuses mittels komplementärer Befestigungsvorrichtungen fixiert werden. In gleicher Weise schlägt die EP 1 013 502 A1 eine Rückspiegelanordnung mit einem Trägerkörper aus Kunststoff zur Aufnahme einer Spiegelscheibe vor, der einstückig mit zwei Hohlarmen ausgebildet ist.

Auch diese Konstruktion weist eine Reihe von Nachteilen auf: zum einen können Spiegelgehäuse, die für die oben beschriebenen Rohrbügelversionen konzipiert sind, nicht an dem Tragarm befestigt werden. Es müssen also stets mehrere Gehäusebaureihen bevorratet werden. Auch können Gehäuse der Rohrbügelversion bei einem "Upgrade" zu dem aerodynamisch günstigeren und leichteren Kunststofftragarm nicht weiterverwendet werden. Umgekehrt können an diesem Tragarm keine Spiegelscheiben mit Rahmen, also ohne Gehäuse, befestigt werden.

Darüber hinaus ist die Festigkeit des vollständig aus Kunststoff gefertigten Tragarms begrenzt, so daß ein daran befestigter Spiegel windinduzierten oder vom Fahrzeug übertragenen Vibrtationen verstärkt ausgesetzt ist. Hierzu schlägt das deutsche Gebrausmuster 86 29 506.3 für einen Innenspiegel vor, diesen mittels eines zusätzlichen Stützbeins an der Windschutzscheibe abzudämpfen.

Schließlich ist zur sicheren Befestigung des Gehäuses am Anschlußteil eine entsprechend konfigurierte Befestigung nötig, so daß es nicht, wie beispielsweise bei oben beschriebenen Rohrbügelversion durch einfaches Verdrehen, möglich ist, die selben Tragarme für rechts- und linksgesteuerte Fahrzeuge zu verwenden: während der in Fahrtrichtung linke (rechte) Außenspiegel bei linksgesteuerten Fahrzeugen der Fahrerspiegel (Beifahrerspiegel) ist und daher weniger (mehr) um die Hochachse des Fahrzeugs verdreht ist, ist dies bei rechtsgesteuerten Fahrzeugen gerade umgekehrt. Daher müssen bislang stets vier Varianten (Fahrerspiegel/Beifahrerspiegel für rechts-/linksgesteuert) bevorratet werden. Hierzu schlägt die DE 295 04 245 U! vor, zwischen Spiegelfuß und Spiegelgehäuse nachträglich ein zusätzliches Adapterteil zu montieren, das das Gehäuse gegenüber dem Fuß in unterschiedlichen Winkeln fixiert. Dazu ist jedoch ein zusätzliches Teil notwendig, was nicht nur Gewicht, Fertigungs- und Montageaufwand erhöht, sondern zusätzliche Vibrationsquellen einführt.

Ausgehend von der EP 1 024 051 A2 ist es daher eine Aufgabe der vorliegenden Erfindung, einen Tragarm für einen Fahrzeugspiegel zu schaffen, der eine höhere Festigkeit aufweist. Eine Weiterbildung schafft einen Tragarm für einen Fahrzeugspiegel der sowohl für Fahrer- als auch Beifahrerspiegel für sowohl rechts- als auch linkgesteuerte Fahrzeuge verwendbar ist.

Diese Aufgaben löst der Gegenstand der unabhängigen Ansprüche.

Gemäß einer ersten Ausführung der vorliegenden Erfindung umfaßt ein Tragarm für einen Fahrzeugspiegel mit wenigstens einem Spiegelkopf einen oberen Haltearm aus Kunststoff mit einem oberen Befestigungselement zur Befestigung an einem Fahrzeug, einen unteren Haltearm aus Kunststoff mit einem unteren Befestigungselement zur Befestigung an dem Fahrzeug und einen einstückig mit dem oberen und unteren Haltearm ausgebildeten Steg, wobei der Steg ein metallisches Rohr umfaßt, dessen oberes bzw. unteres Ende fest mit dem oberen bzw. unteren Haltearm verbunden ist.

Das metallische Rohr, das fest in dem Tragarm integriert ist, verleiht diesem eine hohe Festigkeit, vor allem hinsichtlich der Windlasten und der am Fahrzeug auftretenden Vibrationen. Gleichzeitig ermöglicht es, Spiegelköpfe (weiter) zu verwenden, die für die Befestigung an herkömmlichen Rohrbügeln konzipiert sind. Es können also vorteilhaft dieselben Spiegelköpfe sowohl für herkömmliche einfache (und damit billige) metallische Rohrbügel als auch erfindungsgemäße Tragarme verwendet werden.

Insbesondere gegenüber dem oben erläuterten einstückigen Kunststofftragarm bietet das metallische Rohr auch eine bessere Befestigungsmöglichkeit, da hier entsprechende Befestigungselemente direkt am Metallrohr und nicht in weicherem Kunststoff angreifen. Bei allen bekannten Befestigunsarten (formschlüssige Steckverbindungen, Verschraubungen, Klemmungen) reduziert sich die Festigkeit der Verbindung Spiegelkopf-Tragarm bislang durch die Alterung des Kunststoffes.

Gegenüber den bekannten U-förmigen Rohrbügeln, die komplett aus Metall hergestellt sind, weist der Tragarm gemäß der ersten Ausführung der vorliegenden Erfindung aufgrund der Kunststoffhaltearme den Vorteil geringeren Gewichts und einer größeren Designfreiheit, insbesondere unter aerodynamischen Gesichtspunkten, auf. Trotzdem können aufgrund des Metallrohres, das hierzu vorteilhafterweise identisch zu dem Quersteg bekannter Rohrbügel ausgebildet sein kann, die selben Spiegelköpfe verwendet werden.

Zur weiteren Verstärkung der Kunststoffiragarme kann wenigstens einer dieser Arme ein oder mehrere Einlegeteile, vorzugsweise aus Metall, umfassen. Hierdurch ist es vorteilhaft möglich, die Wandstärken in besonders belasteten Bereichen gering zu halten, was nicht nur Materialkosten spart, sondern bei der Herstellung unerwünschte Materialsenken vermeidet.

Wie einleitend ausgeführt, wird in der vorliegenden Anmeldung mit Spiegelkopf stets wenigstens eine Spiegelscheibe sowie ein diese haltender Rahmen oder ein Gehäuse verstanden, in dem die Spiegelscheibe fest oder festellbar angeordnet ist.

Diesbezüglich wird insbesondere auf die in der Einleitung genannten Druckschriften verwiesen.

Besonders kostengünstig kann ein erfindungsgemäßer Tragarm dadurch hergestellt werden, daß das metallische Rohr an seinem Ende durch Einspritzen an dem oberen und/oder unteren Haltearm befestigt wird. Indem das metallische Rohr in die Gußform eingelegt und der die Haltearme bildende Kunststoff so eingespritzt wird, daß er die Stirnenden des metallischen Rohres von innen und/oder außen umfliest, wird der Tragarm integral gefertigt. Besonders vorteilhaft wird dabei das metallische Rohr mit einem integral mit dem oberen und/oder unteren Haltearm ausgebildeten Kunststoffrohr von innen vollständig umspritzt. Für das Einspritzen des metallischen Rohres eigen sich insbesondere Wasser- bzw. Gasinnendruckverfahren.

Gleichermaßen kann das metallische Rohr auch durch Form- oder Reibschluß an dem oberen und/oder unteren Haltearm befestigt sein. Beispielsweise kann das metallische Rohr unter Preßpassung in hierzu vorgesehen Bohrungen im oberen bzw. unteren Haltearm eingreifen oder entsprechende Verzahnungen wie Keilwellenprofile oder Paßfedern aufweisen.

Gleichermaßen kann das metallische Rohr durch Kleben an dem oberen und/oder unteren Haltearm befestigt sein. Die oben erläuterten Befestigungsarten des metallischen Rohres an den Haltearmen können auch gemischt werden, indem für die Befestigung am oberen Haltearm die eine, für die Befestigung am unteren Haltearm die andere Variante gewählt wird.

Bevorzugt weist das metallische Rohr und/oder der obere und/oder der untere Haltearm eine Verzahnung zur Arretierung des wenigstens einen Spiegelkopfes auf. Diese Verzahnung kann beispielsweise in der Mitte des metallischen Rohres vorhanden sein, was eine sehr sichere Arretierung eines mit entsprechen komplementärer Verzahnung versehenen Spiegelkopfes in einem bestimmten Winkel ermöglicht. Alternativ oder zusätzlich können auch die Bereiche des oberen und/oder unteren Haltearms, an bzw. in denen das metallische Rohr befestigt ist, eine entsprechende Verzahnung aufweisen. Verzahnung bedeutet in dieser Anmeldung abkürzend stets alle Vorrichtungen zur formschlüssigen Drehfestlegung wie Innen-, Außenverzahnungen, Keilwellenprofile, Paßfederen, Rasterungen oder dergleichen.

Das obere und/oder untere Befestigungselement kann eine Rasterung zur winkelfesten Fixierung des Tragarms am Fahrzeug umfassen. Hierzu wird beispielsweise auf die in der Einleitung genannte EP 0 697 311 B1 verwiesen. Indem die Befestigungsvorrichtungen in den Halteramen aus Kunststoff intergriert sind, wird vorteilhafterweise die zusätzliche Herstellung und Befestigung separater Befestigungsvorrichtungen wie Rasterungen oder dergleichen unnötig.

Gemäß einer Weiterbildung der vorliegenden Erfindung umfaßt ein erfindungsgemäßer Tragarm für einen Fahrzeugspiegel mit wenigstens einem Spiegelkopf weiterhin einen in Form einer Tragplatte ausgebildeten Steg, wobei der Steg bei der Herstellung einen ausbrechbaren Positionskeil zur Winkelverdrehung des wenigstens einen Spiegelkopfes aufweist.

Der Positionskeil ist so ausgebildet, daß er den wenigstens einen Spiegelkopf, insbesondere die wenigstens eine Spiegelscheibe, in einer stark verdrehten Winkelstellung festlegt, die bei einem links- bzw. rechtsgesteuerten Fahrzeug der Neutralstellung eines Beifahrerspiegels entspricht. Wird der Positionskeil, der hierzu vorteilhafterweise aus Kunststoff besteht und in an sich bekannter Weise Sollbruchstellen zum Ausbrechen umfassen kann, entfernt und der wenigstens eine Spiegelkopf, insbesondere die wenigstens eine Spiegelscheibe, in einer wenig verdrehten Winkelstellung an dem Steg festlegt, entspricht dies bei einem links- bzw. rechtsgesteuerten Fahrzeug der Neutralstellung eines Fahrerspiegels.

Bei der Herstellung eines Tragarms gemäß der zweiten Ausführung der vorliegenden Erfindung wird also zunächst eine Tragplatte mit Positionskeil hergestellt. Auch hierzu eignet sich vorteilhaft das Wasser- oder Gasinnendruckverfahren, wobei die Tragplatte aus Kunststoff hergestellt wird. Anschließend wird der Positionskeil entfernt, falls ein Spiegelkopf in einer gegenüber der Tragplatte weniger geneigten zweiten Winkelstellung befestigt werden soll. Der Positionskeil kann auch später, i.e. nicht direkt bei der Herstellung oder Erstmontage des Tragarms entfernt werden. Falls ein Spiegelkopf in einer gegenüber der Tragplatte stärker geneigten ersten Winkelstellung befestigt werden soll, wird der Positionskeil nicht entfernt.

Vorteilhafterweise trägt das metallische Rohr gemäß der Erfindung die Tragplatte mit Positionskeil.

Weitere Aufgaben, Vorteile und Merkmale ergeben sich aus den Unteransprüchen und den nachfolgend dargestellten Ausführungsbeispielen. Hierzu zeigt:
Fig. 1 einen Tragarm gemäß der vorliegenden Erfindung in der Seitenansicht;
Fig. 2 einen Tragarm gemäße einer Weiterbildung der vorliegenden Erfindung in der Seitenansicht;
Fig. 3 den Tragarm aus Fig. 2 in einer Draufsicht mit und ohne Positionskeil;
Fign. 4A, 4B einen Tragarm gemäß einer modifizierten Weiterbildung der vorliegenden Erfindung in der Seitenansicht;
Fig. 5 den Steg des Tragarms aus Fign. 4A, 4B; und
Fig. 6 ein Fahrzeug mit zwei Außenspiegeln mit Tragarmen gem. Fign. 4A, 4B.

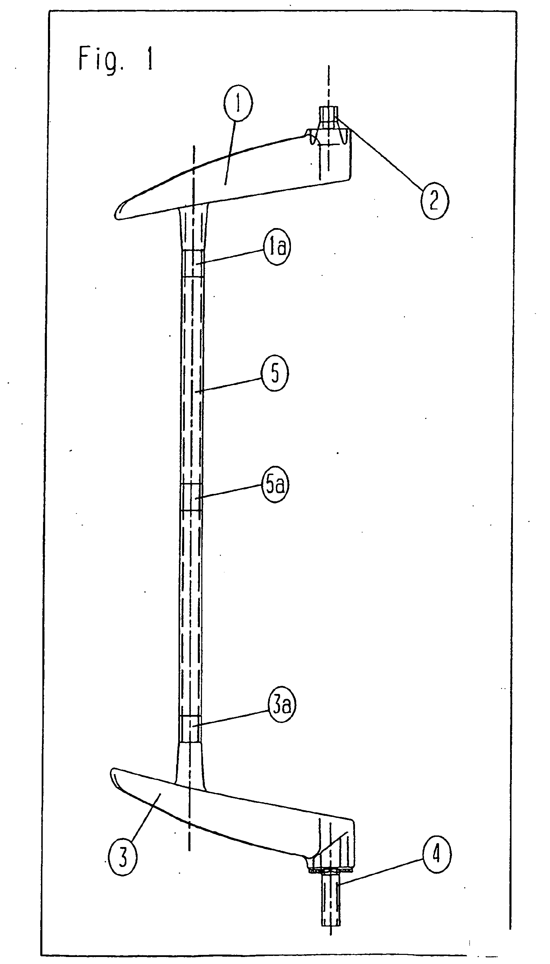

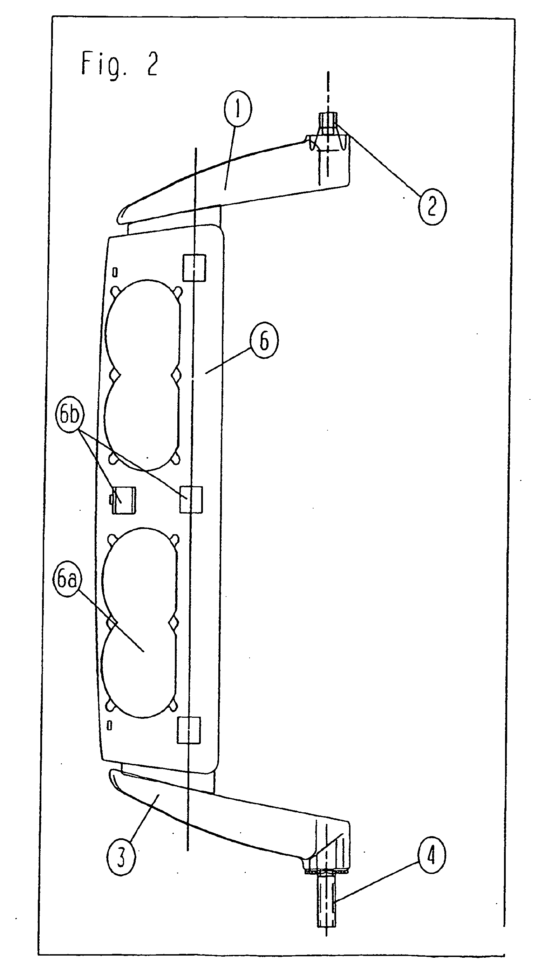

Zur besseren Übersichtlichkeit ist in Fig. 1 bzw. 2 kein am Tragarm befestigbarer Spiegelkopf gezeigt.

Der in Fig. 1 dargestellte Tragarm umfaßt einen oberen Arm 1 aus Kunststoff. Dieser ist vorteilhaft entsprechend aerodynamischer Gesichtspunkte in an sich bekannter Weise aus Kunststoff gefertigt und weist an seinem fahrzeugseitigen Ende eine obere Befestigungsvorrichtung 2 in Form eines Führungskegels auf, der mittels Wellfeder und Klemmung durch einen Achsklemmring mit dem Fahrzeug verbindbar ist.

In ähnlicher Weise weist ein unterer Arm 3 aus Kunststoff an seinem fahrzeugseitigen Ende eine untere Befestigungsvorrichtung 4 in Form einer Zahnrasterung mit zylindrischer Führung auf, die mittels vorgespannter Feder und Klemmung durch einen Achsklemmring mit dem Fahrzeug verbindbar und gegenüber diesem in bestimmten Winkelstellungen durch Einrasten arretierbar ist.

Ein metallisches Rohr 5 ist mit seinem beiden Stirnenden so in den oberen bzw. unteren Haltearm eingespritzt, daß seine Außenumfangsfläche axial teilweise und seine Innenumfangsfläche vollständig mit den oberen und unteren Haltearm bildendem Kunststoff umgeben ist. Hierdurch ist der Tragarm integral hergestellt.

Sowohl das metallische Rohr als auch diejenigen Bereiche des oberen und unteren Haltearms, die das metallische Rohr an dessen Außenumfangsfläche umschließen, weisen je eine Verzahnung (1a, 3a, 5a) zur Arretierung eines Spiegelkopfes in einer bestimmten Winkelstellung auf. Der Spiegelkopf kann in an sich bekannter Weise durch Klemmen, Stecken oder Schrauben an dem metallischen Rohr bzw. den Halteramen befestigt werden.

Fig. 2 zeigt einen Tragarm gemäß einer Weiterbildung der vorliegenden Erfindung. Exemplarisch ist dieser in ähnlicher Weise wie die erste Ausführung aufgebaut und umfaßt einen oberen und unteren Haltearm 1 bzw. 3 mit oberer bzw. unterer Befestigungsvorrichtung 2 bzw. 4. Jedoch können auch andere Tragarmkonfigurationen verwendet werden, bei denen beispielsweise nur ein Haltearm vorgesehen ist oder die Tragplatte an einem Rohrbügel oder einem Vollkunststofftragarm befestigt oder integral mit diesem ausgebildet ist.

Der Steg ist hier in Form einer Tragplatte 6 ausgebildet, die Fixierungen 6a, 6b in Form von Aussparungen, Vorsprüngen oder dergleichen zur Befestigung von Verstellvorrichtungen, Spiegelscheiben und/oder Gehäusen aufweisen kann.

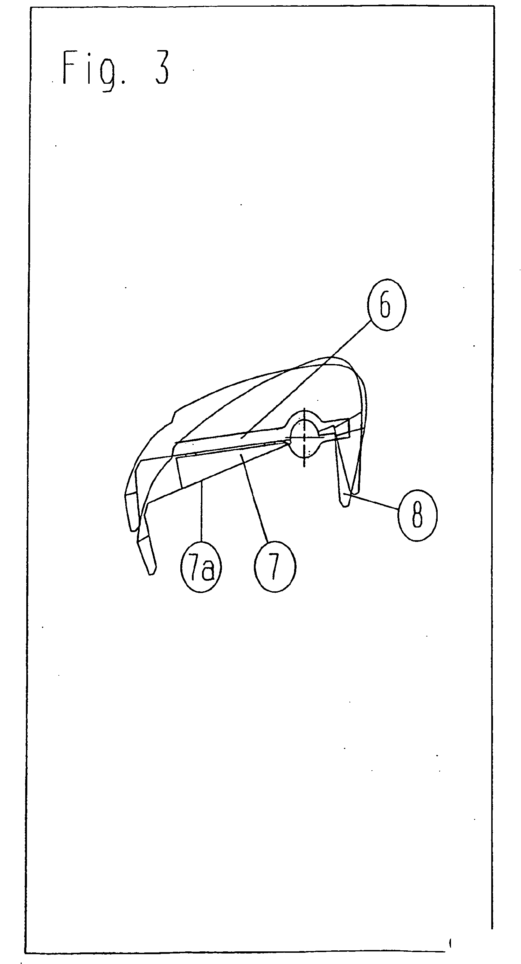

Wie in der Draufsicht gem. Fig. 3 am besten erkennbar, umfaßt der Steg wenigstens bei der Herstellung einen Positionskeil 7. An diesem wird das Gehäuse 8 und eine Spiegelscheibe (nicht dargestellt) eines Spiegelkopfes befestigt, so daß in der hier gezeigten Version ein Beifahrerspiegel eines rechtsgesteuerten Fahrzeugs geschaffen wird. Wird der Positionskeil nach der Herstellung entfernt, so können das Gehäuse 8 und die Spiegelscheibe an dem dann freiliegenden Steg befestigt werden, wobei sie eine weniger verdrehte Winkelstellung einnehmen und so ein Fahrerspiegel eines linksgesteuerten Fahrzeugs geschaffen wird. In analoger Weise können Fahrer- und Beifahrerspiegel für rechts- bzw. linksgesteuerte Fahrzeuge zur Verfügung gestellt werden - in diesem Fall stellt Fig. 3 eine Draufsicht von unten dar.

Zur Befestigung des Gehäuses bzw. der Spiegelscheibe am Positionskeil bzw. nach dessen Entfernung an dem dann freiliegenden Steg eignet sich besonders das in der internationalen Patenanmeldung mit der Nummer WO 2002072386 vom 12.03.2001 beschriebene Halbschalengetriebe oder eine ähnliche Verstelleinrichtung. Insofern wird auf diese Anmeldung vollinhaltlich Bezug genommen.

Erfindungsgemäß kann somit ein Tragarm hergestellt werden, der sowohl als Beifahrerspiegel für rechtsgesteuerte (linksgesteuerte) Fahrzeuge als auch als als Fahrerspiegel für linksgesteuerte (rechtsgesteuerte) Fahrzeuge verwendet werden kann. Hierzu wird zunächst ein Tragarm mit einer Tragplatte 6 hergestellt, auf der ein Positionskeil 7 derart angeordnet ist, daß eine Seite 7a gegenüber der Tragplatte geneigt, i.e. in einer Montagestellung des Spiegels um eine Hochachse des Fahrzeugs verdreht, ist.

Soll der Spiegelkopf in einer stark verdrehten Beifahrerposition befestigt werden, wird seine Spiegelscheibe, direkt oder mittels Verstellvorrichtung, und gegebenenfalls sein Gehäuse 8 an der gegenüber der Tragplatte 6 geneigten Seite 7a des Positionskeils befestigt. Hierzu weist der Positionskeil wenigstens an seiner geneigten Seite 7a entsprechende Fixierungen auf.

Soll hingegen von Anfang an oder auch später der Spiegelkopf in einer weniger stark verdrehten Fahrerposition befestigt werden, wird der Positionskeil entfernt und die Spiegelscheibe, direkt oder mittels Verstellvorrichtung, und gegebenenfalls das Gehäuse 8 an der Tragplatte 6 selber befestigt.. Vorteilhafterweise weist dazu der Positionskeil und die Tragplatte identische Fixierungen auf.

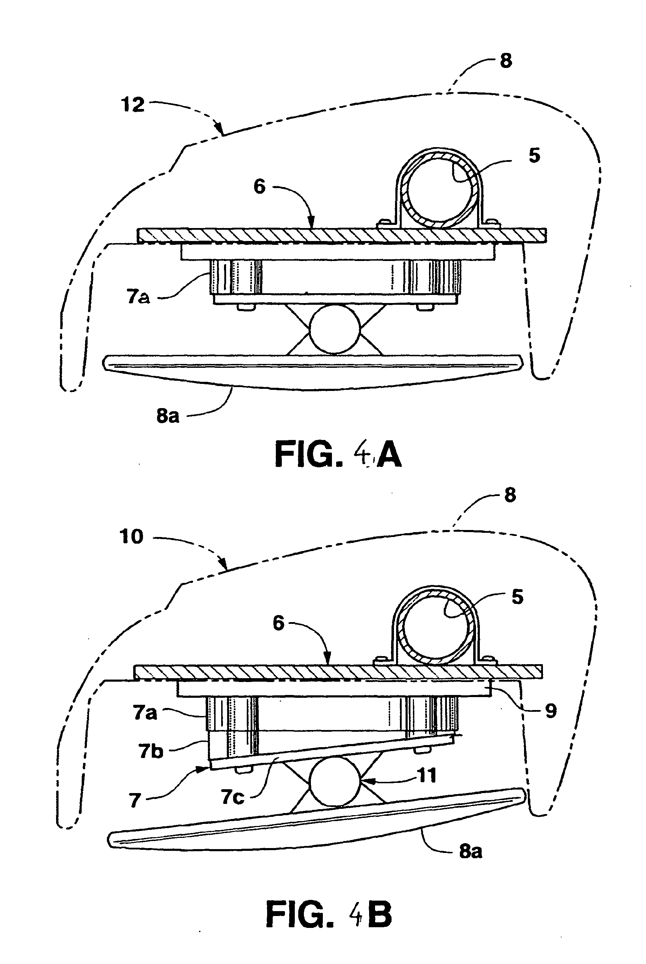

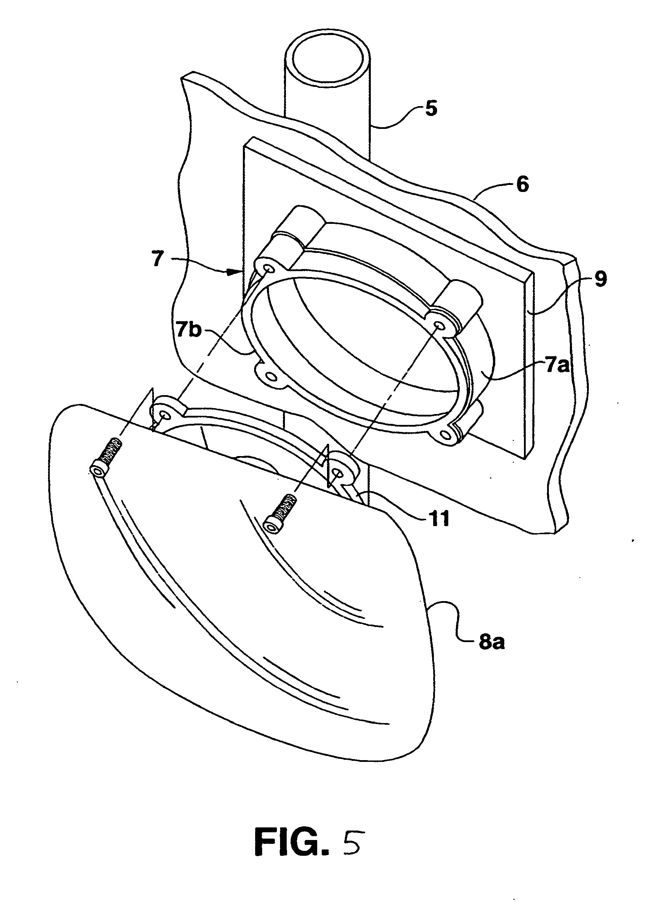

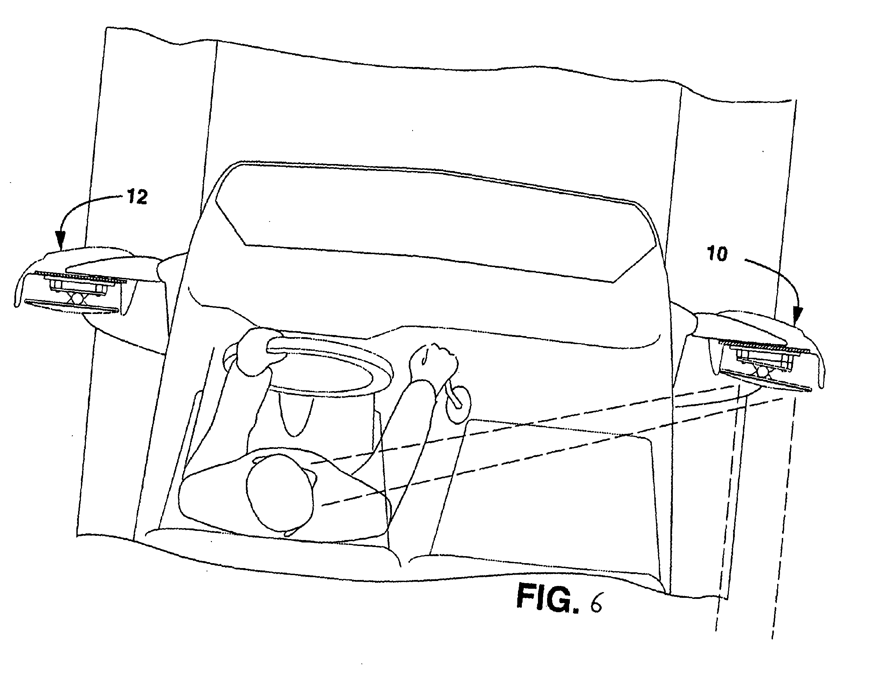

Fign. 4 bis 6 zeigen eine modifizierte Weiterbildung der vorliegenden Erfindung. Wie in Fig. 6 dargestellt, sollen für den Fahrerspiegel 12 bzw. Beifahrerspiegel 10 dieselben Tragarme verwendet werden.

Der Tragarm umfaßt eine Tragplatte 6, die an einem Rohr 5, beispielsweise einem metallischen Rohr wie in der ersten Ausführung der vorliegenden Erfindung, mittels Reibschluß in an sich bekannter Weise befestigt ist. An der Tragplatte ist ein Gehäuse 8 (strichliert dargestellt) befestigt.

Die Tragplatte umfaßt einen ausbrechbaren Positionskeil 7, der seinerseits einen nicht ausbrechbaren, fest mit der Tragplatte 6 verbundenen unteren Teil 7a und, zumindest bei der Herstellung, einen ausbrechbaren oberen Teil 7b aufweist.

Für den Beifahrerspiegel 10 wird der Positionskeil nicht ausgebrochen und am oberen Teil 7b eine Spiegelträgerplatte mit Spiegelscheibe 8a mittels Verstelleinrichtung 11 befestigt.

Für den Fahrerspiegel 12 wird der obere Teil 7b des Positionskeils 7 ausgebrochen und die Spiegelträgerplatte mit Spiegelscheibe 8a direkt am unteren Teil 7a mittels Verstelleinrichtung 11 befestigt.

Auf diese Weise kann derselbe Tragarm mit derselben Trägerplatte sowohl für Fahrer- als auch Beifahrerspiegel verwendet werden. Es sind hierzu auch keine zusätzlichen Teile nötig.

Wie in den Weiterbildungen gezeigt, kann an der Tragplatte das Gehäuse (Fig. 3) oder nur die Spiegelträgerplatte mit Spiegelscheibe (Fign. 4 bis 6) befestigt werden.

## Patentansprüche

1. Tragarm für einen Fahrzeugspiegel mit wenigstens einem Spiegelkopf, wobei der Tragarm umfaßt:
einen oberen Haltearm (1) aus Kunststoff mit einem oberen Befestigungselement (2) zur Befestigung an einem Fahrzeug;
einen unteren Haltearm (3) aus Kunststoff mit einem unteren Befestigungselement (4) zur Befestigung an dem Fahrzeug; und
einen einstückig mit dem oberen und unteren Haltearm ausgebildeten Steg;
**dadurch gekennzeichnet, daß**
der Steg ein metallisches Rohr (5) umfaßt, dessen oberes bzw. unteres Ende fest mit dem oberen bzw. unteren Haltearm verbunden ist.

2. Tragarm nach Anspruch 1, **dadurch gekennzeichnet, daß** das metallische Rohr an seinem Ende durch Einspritzen an dem oberen und/oder unteren Haltearm befestigt ist.

3. Tragarm nach Anspruch 2, **dadurch gekennzeichnet, daß** das metallische Rohr mit einem integral mit dem oberen und/oder unteren Haltearm ausgebildeten Kunststoffrohr von innen umspritzt ist.

4. Tragarm nach Anspruch 1, **dadurch gekennzeichnet, daß** das metallische Rohr durch Form- oder Reibschluß an dem oberen und/oder unteren Haltearm befestigt ist.

5. Tragarm nach Anspruch 1, **dadurch gekennzeichnet, daß** das metallische Rohr durch Kleben an dem oberen und/oder unteren Haltearm befestigt ist.

6. Tragarm nach einem der vorhergehenden Ansprüche, **dadurch gekennzeichnet, daß** das Rohr und/oder der obere und/oder der untere Haltearm eine Verzahnung (1a; 3a; 5a) zur Arretierung des wenigstens einen Spiegelkopfes aufweist.

7. Tragarm nach einem der vorhergehenden Ansprüche, **dadurch gekennzeichnet, daß** das obere und/oder untere Befestigungselement eine Rasterung zur winkelfesten Fixierung am Fahrzeug umfaßt.

8. Tragarm nach einem der vorhergehenden Ansprüche, wobei der Tragarm einen in Form einer Tragplatte (6) ausgebildeten Steg umfaßt, **dadurch gekennzeichnet, daß** der Steg bei der Herstellung einen ausbrechbaren Positionskeil (7) zur Winkelverdrehung des wenigstens einen Spiegelkopfes aufweist.

9. Rückspiegelanordnung für ein Fahrzeug, insbesondere ein Nutzfahrzeug, die einen Tragarm gemäß einem der Ansprüche 1 bis 8 sowie wenigstens einen daran befestigbaren Spiegelkopf umfaßt.

10. Verfahren zur Herstellung eines Tragarms nach einem der Ansprüche 1 bis 9, **dadurch gekennzeichnet, daß** zur Herstellung von Kunststoffteilen das Wasser- oder Gasinnendruckverfahren eingesetzt wird, bei dem bei der Formgebung Wasser bzw. Gas in den Kunststoff eingebracht wird.

## Claims

1. A support arm for a vehicle mirror having at least one mirror head, said support arm comprising:
an upper holding arm (1) of plastics having an upper attachment member (2) for mounting on a vehicle;
a lower holding arm (3) of plastics having a lower attachment member (4) for mounting on the vehicle; and
a base formed integrally with said upper and lower holding arms;
**characterized in that**
said base includes a metal tube (5) having upper and lower ends fixedly connected with said upper and lower holding arms, respectively.

2. The support arm according to claim 1, **characterized in that** said metal tube is fastened at its end by injection at said upper and/or lower holding arm.

3. The support arm according to claim 2, **characterized in that** said metal tube is internally injection molded with a plastics tube formed integrally with said upper and/or lower holding arm.

4. The support arm according to claim 1, **characterized in that** said metal tube is secured to said upper and/or lower holding arm by means of positive engagement or frictional engagement.

5. The support arm according to claim 1, **characterized in that** said metal tube is secured to said upper and/or lower holding arm by means of bonding.

6. The support arm according to any one of the preceding claims, **characterized in that** said tube and/or said upper and/or said lower holding arm includes a denticulation (1a; 3a; 5a) for immobilizing the at least one mirror head.

7. The support arm according to any one of the preceding claims, **characterized in that** said upper and/or lower holding arm includes a raster for fixed-angle attachment to the vehicle.

8. The support arm according to any one of the preceding claims, wherein said support arm comprises a base formed in the shape of a support plate (6), **characterized in that** during manufacture, said base includes a positioning wedge (7) adapted to be broken out for angular adjustment of said at least one mirror head.

9. A rearview mirror assembly for a vehicle, in particular a utility vehicle, comprising a support arm according to any one of claims 1 to 8 and at least one mirror head adapted to be mounted on it.

10. A method for manufacturing a support arm according to any one of claims 1 to 9, **characterized in that** the water or gas internal pressure process, in which water or gas is introduced into the plastics material during molding, is employed for producing plastics parts.

## Revendications

1. Bras support pour un rétroviseur pour véhicule, comprenant au moins une tête à miroir, le bras support comprenant :
un bras support supérieur (1) en matière synthétique, avec un élément de fixation supérieur (2) pour la fixation à un véhicule ;
un bras support inférieur (3) en matière synthétique, avec un élément de fixation inférieur (4) pour la fixation au véhicule ; et
une nervure, réalisée d'une seule pièce avec les bras supports supérieur et inférieur ;
**caractérisé en ce que**
la nervure comprend un tube (5) métallique, dont l'extrémité supérieure ou inférieure est reliée rigidement au bras support supérieur ou inférieur.

2. Bras support selon la revendication 1, **caractérisé en ce que** le tube métallique est fixé à son extrémité par injection sur le bras support supérieur et/ou inférieur.

3. Bras support selon la revendication 2, **caractérisé en ce que** le tube métallique est enrobé par injection depuis l'intérieur, par un tube en matière synthétique réalisé d'une seule pièce avec le bras support supérieur et/ou inférieur.

4. Bras support selon la revendication 1, **caractérisé en ce que** le tube métallique est fixé au bras support supérieur et/ou inférieur par une liaison par ajustement de forme ou par friction.

5. Bras support selon la revendication 1, **caractérisé en ce que** le tube métallique est fixé par collage au bras support supérieur et/ou inférieur.

6. Bras support selon l'une des revendications précédentes, **caractérisé en ce que** le tube et/ou le bras support supérieur et/ou inférieur présente(nt) une denture (1a ; 3a ; 5a) pour blocage de la au moins une tête à miroir.

7. Bras support selon l'une des revendications précédentes, **caractérisé en ce que** l'élément de fixation supérieur et/ou inférieur comprend un encliquetage pour la fixation selon un angle fixe par rapport au véhicule.

8. Bras support selon l'une des revendications précédentes, le bras support comprenant une nervure réalisée sous la forme d'une plaque support (6), **caractérisé en ce que** lors, de la fabrication, la nervure présente un coin de positionnement (7) fracturable, pour assurer la rotation angulaire de la au moins une tête à miroir.

9. Agencement d'un rétroviseur pour un véhicule, en particulier un véhicule utilitaire, comprenant un bras support selon l'une des revendications 1 à 8, ainsi qu'au moins une tête à miroir susceptible d'y être fixée.

10. Procédé de fabrication d'un bras support selon l'une des revendications 1 à 9, **caractérisé en ce que**, pour assurer la fabrication de pièces en matière synthétique, est utilisé un procédé à pression intérieure d'eau ou de gaz, pour lequel, lors du formage, de l'eau ou un gaz est introduit(e) dans la matière synthétique.
